# EUROPEAN PATENT APPLICATION

(11) **EP 2 911 323 A1**
(43) Date of publication of application: **26.08.2015**
(21) Application number: 14156141.5
(22) Date of filing: 21.02.2014
(51) Int. Cl.: H04B 17/00, H01Q 3/26

(54) **Method and apparatus for self-calibrating antenna arrays**

(71) Applicant: Airrays GmbH, 01109 Dresden (DE)
(72) Inventor: The designation of the inventor has not yet been filed
(74) Representative: Lippert, Stachow & Partner

(57) **Abstract**

The invention concerns a method of self-calibrating active antenna arrays comprising a plurality of active antenna elements whereas each antenna element comprising an antenna and a transceiver connected to the antenna at a radio frequency (RF) side via a transmit path and a receive path whereas the transceivers of all antenna elements are connected at a baseband side to a baseband processing unit and the antenna elements are calibrated and to concern an apparatus therefor.

The object of the invention is to provide a calibration technique that improves the phase and time delay of each antenna element dynamically during operation of the system without interrupting the transmission and reception process and to provide a corresponding apparatus.

This is solved by dynamically calculating a calibration signal for every antenna element whereas all antenna elements will be aligned to one another by said calculated calibration signal due to specific correlation results.

## Description

The present invention provides a method of self-calibrating active antenna arrays comprising a plurality of active antenna elements whereas each antenna element at least comprising an antenna and a transceiver connected to the antenna at a radio frequency (RF) side via a transmit path or a receive path whereas the transceivers of all antenna elements are connected at a baseband side to a baseband processing unit and the antenna elements are calibrated.

It provides also an apparatus for self-calibrating active antenna arrays comprising a plurality of active antenna elements whereas each antenna element comprising an antenna and a transceiver with a connection to the antenna via a transmit path and a receive path whereas the transceivers of all antenna elements are connected to a baseband processing unit.

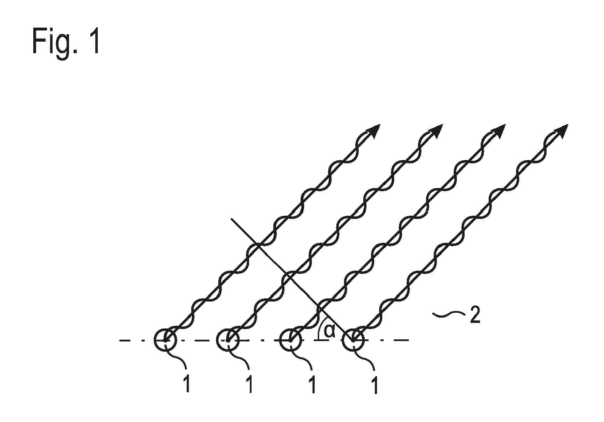

Adaptive antenna arrays are well known since years. Instead of making use of a single antenna to transmit or receive a signal, multiple antennas are used that are arranged in some geometrical order. This arrangement is typically referred to as an antenna array. For transmission, a signal to be transmitted is presented to all antennas of the antenna array. By carefully controlling each phase of each antenna, the directivity of the array is influenced. This is caused by overlapping the radiated signals in the far because they interfere with each other constructively or destructively depending on their phase. This is shown in Figure 1.

Figure 1 shows a linear array made of four transmit antennas. It shows that in direction of the angle α the wave fronts are all aligned, i.e., the signals from the antennas add constructively in this direction.

In receive direction, antenna arrays work in a similar fashion. The phases of the individually receive antennas are aligned such that directivity in a specific direction is obtained.

The main advantage of antenna arrays is that antenna patterns can be formed electronically. One possible application is beam forming, i.e., creating patterns with a high directivity towards a specific direction. By controlling the phases, the beam can be steered towards a target receiver or transmitter and it can also be used to track the target.

Another application is concerned with interference suppression especially when the interference is highly directional. In this case, a pattern is formed that has a high attenuation towards the direction of the interference.

Conventional antenna array technology makes use of phase shifters that are applied to the signal at passband. In this case, in transmit direction, the signal is first converted to carrier frequency and then split to be presented to a multitude of phase shifters. Likewise, in receive direction, each antenna signal is first shifted prior to combining and then converted back to baseband where the signal processing takes place.

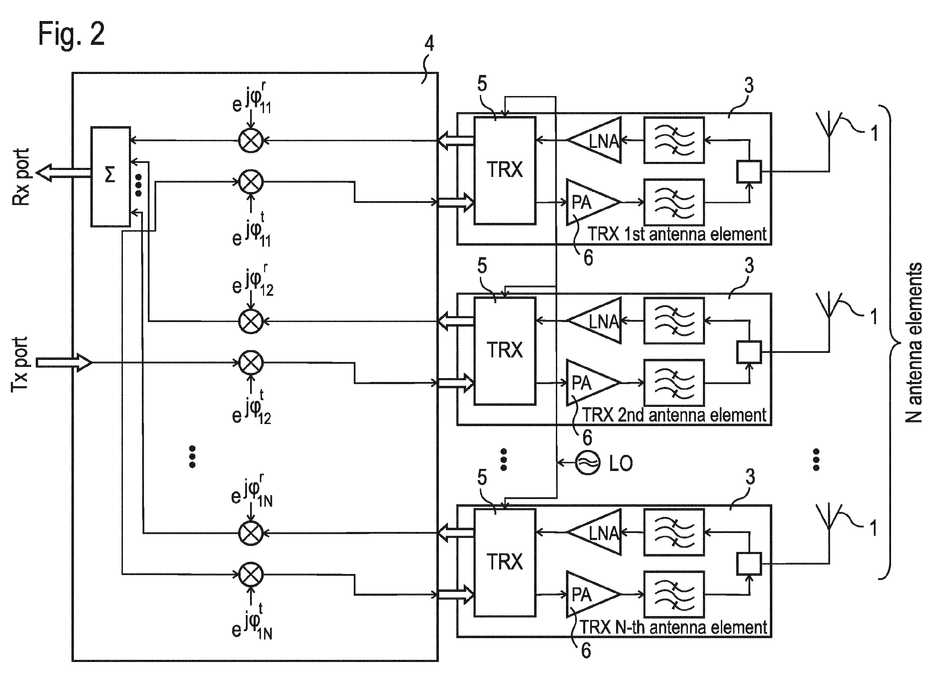

An alternative means for beam forming is to add the phases to the baseband signal prior to up-converting the signal to RF or after down-converting the RF signal. In this case, each antenna is associated with a transceiver and an RF front-end consisting of power amplifiers, filters, diplexers, and so forth. Such a configuration is shown in Figure 2.

Figure 2 shows multiple antenna elements all having their own antennas, RF front-end, transceivers and baseband processing units. Each antenna is responsible for radiating the transmit signal for that specific element and for picking up the received signal. In the RF front-end amplification and additional filtering of the transmit signal and the receive signal occur. The transceiver is responsible for up-converting the transmit signal from baseband to RF frequency and it is responsible for down-converting the receive signal from RF to baseband, respectively. The baseband unit itself is responsible for applying a phase shift and/or an amplitude scaling to the transmit signals and the receive signals according to the Tx and Rx beam forming vectors. The Tx beam forming vector is defined as the vector that holds all phases (and optionally the amplitudes) for the transmit paths for all antenna elements. Referring to Figure 2, the beam forming vector in Tx direction is *u_{T}*= [*e^{jϕ}*₁*^{t} e^{jϕ}*₂*^{t} ... e^{jϕ}_{N}^{t}*]*^{T}*, with the phase vector [*ϕ*₁*^{t} ϕ*₂*^{t} ...ϕ_{N}^{t}*]*^{T}* in case the beam forming vector only affects the phases, where "T" denotes transposition, and "t" denotes that those phases are for transmit direction and the index denotes the number of the antenna element. If additional the amplitudes are to be scaled, the beam forming vector would consist of complex valued elements *u_{T}*= [*u*₁*^{t} u*₂*^{t} ... u_{N}t*]*^{T}*, where each element uᵢ^{t} for i = 1 ... N is a complex value representing amplitude and phase.

Likewise, the Rx beam forming vector is defined as the vector that holds all phases (and optionally the amplitudes) for the receive paths for all antenna elements.

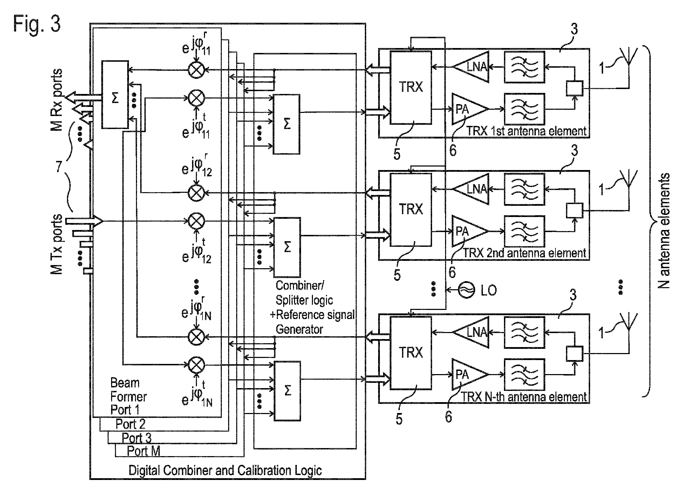

The main advantage of adding the phase shifts at baseband rather than at RF is that for different Tx and Rx signals different Tx and Rx phase vectors can be applied. This is even true when the transmission of those different Tx signals happens concurrently. Likewise, different directivity can be obtained for different concurrently received Rx signals if for each received signal, a different Rx phase vector is applied. A corresponding block diagram for such a configuration is shown in Figure 3.

In Figure 3, the different signals to be transmitted and received, respectively, are mapped onto different ports. In transmit direction each signal to be transmitted is individually weighted. Then, the sum of all transmit signals for each antenna element is built prior to presenting the sum of each antenna element to the transceiver. In receive direction, the received signals for each antenna element are split and then individually weighted by multiplying with some complex values, *e^{jφ}ₚₗ^{r}*, where the index p denotes the port number, the index l denotes the number of the antenna element and "r" denotes that the phase is for the receive side. The weighted sums are then presented to multiple output ports of the antenna array.

The main challenge of building such an antenna array lies within the calibration of the network. Since RF transceivers and the RF front-end are largely made of analog components each of which having its own tolerances, and the quality of the beam forming is largely dependent on the accuracy of the applied phases and amplitudes, the deviations resulting from those tolerances need to be estimated and corrected for. Additional tolerances are coming from the analog matching components and PCB tolerances. In case the antenna array is built as shown in Figure 3, i.e., the phases are applied at baseband level and individual transceivers are used, additional deviations stemming from the multitude of transceivers need to be considered as well. In particular, since phase locked loops (PLLs) used to control carrier and sample frequencies can lock at different phases, the phase offsets of both carrier frequency and sample frequency need to be calibrated for both transmit and receive directions.

Conventional array implementations either use a factory calibration or make use of a dedicated calibration mode. Factory calibration only works, if the design guarantees for fixed phase relations.

A dedicated calibration mode may use a reference transmitter for calibrating the receivers or it may make use of one or many of the antennas typically used for transmit to emit the calibration signal. Likewise, as for calibrating the transmitters, the array may make use of a dedicated reference receiver or it may make use of one or many of the antennas typically used for reception to receive the calibration signal from the transmit antennas. Different calibration strategies exist. In one case, the reference signal is broadcasted to many antennas. Another strategy is to alternate between the different antennas and to calibrate the phases one by one.

The major drawback of relying solely on factory calibration is that age and temperature may cause phases to vary over time in which case a recalibration would be required. Bringing in a phased array for factory calibration may not be feasible for many applications.

In WO 2011/113526 an active antenna for a mobile telecommunications network is provided, comprising also a plurality of radio elements, each including a transmit and/or a receive path coupling to an antenna element, and each including comparison means for comparing phase and/or amplitude of transmitted or received signals with reference values in order to adjust the characteristics of the antenna beam. This kind of calibration only works with an including feed arrangement for supplying reference signals of amplitude and/or phase and therefor additional calibration equipment is needed.

The major drawback of a dedicated calibration mode is that the antenna array cannot be used while calibration is in progress. If deployed in an environment where temperature variations demand frequent recalibration but the application requires a continuous signal transmission/reception, such a calibration technique may not be feasible.

The calibration technique disclosed in this invention disclosure does not possess any of those drawbacks mentioned above.

It is therefore the object of the invention to provide a calibration technique that improves the phase and time delay of each antenna element dynamically during operation of the system and to provide a corresponding apparatus.

The object of the invention is achieved thereby that a calibration signal is dynamically calculated whereas a predetermined signal is added to a signal for every antenna element before this signal is transferred by the transceiver of the antenna element, whereas a power of the predetermined signal is at least one order of magnitude smaller than the power of the transferred signal of every antenna element, the so modified transferred signal of the antenna element is correlated with the predetermined signal in the baseband processing unit and all antenna elements will be aligned to one another by said calculated calibration signal due to the correlation result.

In particular, the calibration signal for the transmit path is calculated, whereas the predetermined signal specific for every antenna element is added to the transmit signal for every antenna element in the baseband processing unit, then the transmit signal is picked up and combined from all antenna elements on the RF side, after that the picked up signal is correlated with the predetermined signal specific for every antenna element for all antenna elements in the baseband processing unit, and the phase of the correlation result is compared to the desired phase and the amplitude of the correlation result is compared to the desired amplitude. The results of said comparisons are used to tune the phase and the amplitude corrections (at the baseband side) for each antenna element. Likewise, the calibration signal for the receive path is calculated whereas the predetermined signal is split and added to the receive signal for every antenna element on the RF side, then the receive signal from every antenna element is correlated with the predetermined signal of this particular antenna element in the baseband processing unit, so that the correlation results are used to adjust the time offset of the antenna elements.

The calibration signal for the transmit path aligns a Tx-time delay of every active antenna element and the calibration signal for the receive path aligns a Rx-time delay of every active antenna element. Therefor the signals of all antenna elements will be aligned to one another in time without interrupting the transmission and reception process.

Advantageously, the calibration in Tx-time delay and Rx-time delay can be executed concurrently, whereas the Tx-time delay and the Rx-time delay are aligned in the baseband.

It is essential that the predetermined signal specific for every antenna element added to each antenna element has a bandwidth smaller than the transmit signal and receive signal and has a signal power free of influence to the transmit signal and the receive signal. A signal power free of influence to the transmit signal means that a possible reduction in transmit signal quality will not be measureable, and the error vector magnitude and spectral mask requirements are fulfilled. A signal power free of influence to the receive signal means that the performance of the receiver will not be measurably affected.

The predetermined signal that is used for the calibration method is generated as a pseudo-noise (PN) signal. In order to be able to distinguish the PN signals from one another, each of those PN signals is a unique binary pseudo random sequence of data bits generated with a different PN sequence generator or with a different binary sequence phase offset.

The present invention provides also an apparatus for self-calibrating active antenna array that comprises signal generators generating a predetermined signal specific for each antenna element and a reference transceiver unit that is connected to the baseband processing unit comprising a combiner combining signals of the connections between the transceivers and the antennas of the several antenna elements and a splitter logic unit dividing signals from the reference transceiver to the antennas of the several antenna elements and means for correlations signals from the reference transceiver.

The reference transceiver unit comprises of a reference transmitter and a reference receiver, whereas the reference transceiver unit is combined with the active antenna elements by means of couplers and RF wires. In an embodiment of the invention the reference transceiver unit is combined with the active antenna elements by radiation.

For signal generation the signal generator is designed as a pseudo noise (PN) generator.

The invention will be illustrated by means of embodiments. The corresponding drawings show
- Fig. 1: A schematical drawing of wave fronts emitted by an antenna array;
- Fig. 2: A conceptual block diagram of an antenna array where weighting occurs in the baseband;
- Fig. 3: A network for beam forming multiple transmit and receive signals at once;
- Fig. 4: A conceptual diagram of an antenna array with a calibration logic according to the present invention;
- Fig. 5: An example of a pseudo-noise (PN) signal generator;
- Fig. 6: A pseudo-noise signal correlator;
- Fig. 7: An example of a correlator bank used for measuring the time delay by sampling the received signal at different time positions;
- Fig. 8: Discriminator curve of a discriminator, respectively.

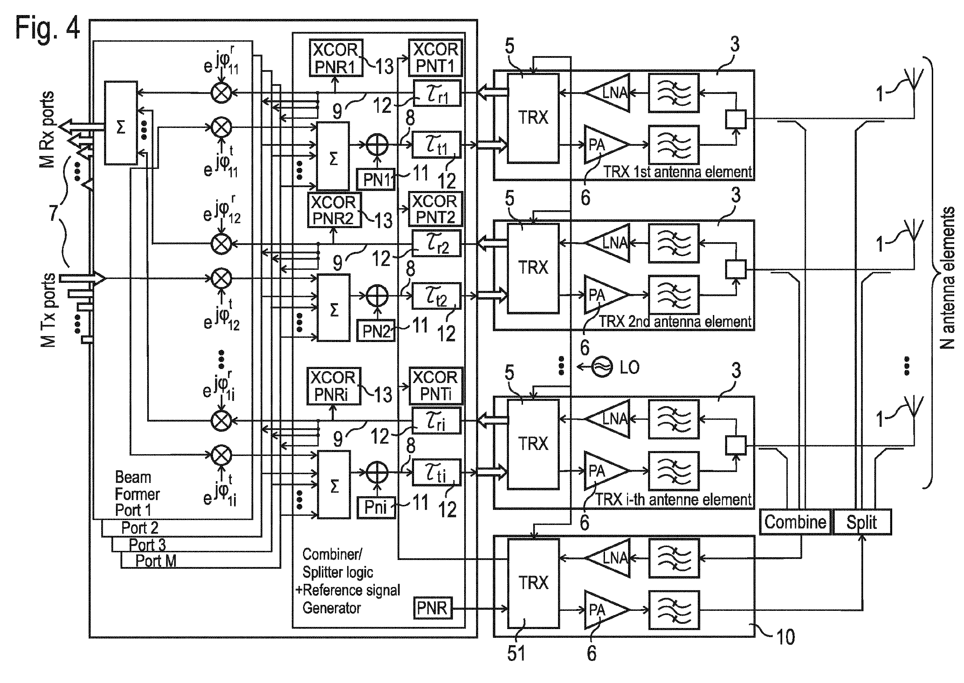

Figure 4 shows a similar network for beam-forming multiple transmit and receive signals at once as shown in Figure 3. The different signals to be transmitted and received are mapped onto different ports 7, respectively. In transmit direction each signal to be transmitted is individually weighted. Then, the sum of all transmit signals for each antenna element 3 is calculated prior to presenting the sum to the antenna element transceiver 5. In receive direction, the received signals for each antenna element 3 are split and then individually weighted by multiplying with some complex values, *e^{jφ}ₚₗ^{r}*, where the index p denotes the port number, index *l* denotes the number of the antenna element 3 and "*r*" denotes that the phase is for the receive side. The weighted sums are then presented to multiple output ports of the antenna array. Alternatively, vectors containing amplitude variations can be applied as well.

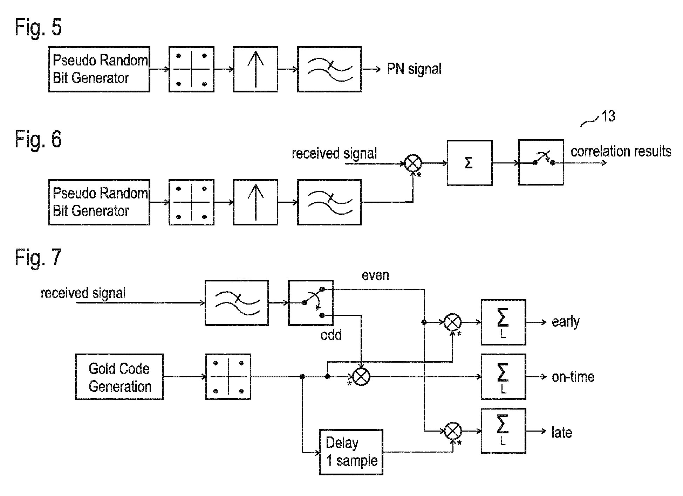

For calibration purposes, on the transmit side, each antenna element 3 additionally adds a pseudo-noise (PN) signal 11 to the transmit signal. Typically, this PN signal is a modulated signal where the data bits are a binary pseudo random sequence. In order to avoid out-of-band emissions, the PN signal shall possess a spectrum that is smaller in width than the bandwidth of the main signal. In order to be able to distinguish the PN signals from one another, each of those PN signals comes from a different PN signal generator that generates a different PN sequence, or, alternatively, generates the same PN sequence but with a different binary sequence phase offset. An example of a PN signal generator is shown in Figure 5.

The PN signal generator of Figure 5 first generates a binary sequence that is mapped to a Quadrature Phase Shift Keying constellation (QPSK). The QPSK mapped symbols are then up-sampled and filtered.

Additionally and differently to the network of Figure 3, the inventive antenna array contains a reference receiver 51 and a reference transmitter 51. The reference receiver picks up the transmit signal from all antenna elements. It is either coupled conductively or it picks up the radiated signal.

For calibration purposes, the received signal is correlated with the PN signals for each of the antenna elements 3 at the correlators 13. The phase of the correlation result is compared to the desired phase and the amplitude of the correlation result is compared to the desired amplitude. Those results are then used to tune the phase and amplitude corrections at the transmitter side for each element.

A conceptual drawing of the correlation is shown in Figure 6. The correlation is done by standard means. An identical PN signal is generated at the receiver side. The samples of the received signal are multiplied with the complex conjugate samples of the PN signal and the products are added over the correlation length. When switching the transceiver on, the phase lock loop used to generate the sample clock may lock at an arbitrary position. In this case, each sample delay may exhibit a random phase. For beam forming, it is key that each antenna element 3 transmits with the same sample delay or Tx-time delay.

One further benefit of this invention is that the PN signal is further used to estimate the time delay. For measuring the time delay, a correlator bank is used that samples the received signal at different time positions. The techniques for initially finding the time delay are well known from spread spectrum receiver design. In an antenna array where propagation delays are known, the time uncertainty introduced by each antenna element is expected to be at the order of a fraction of a sample. For calibrating the delay, a conventional delay lock loop algorithm (DLL) can be used. The DLL consists of a so called discriminator that estimates the time offset, a loop filter, and a means to correct time using a time delay correction unit. Referring to Figure 4, for the receive path of the i-th antenna element 3, the DLL comprises of the PN signal generator, PNR, that injects a PN signal into all receive paths using the calibration transmitter, the correlator bank XCOR PNRI for the i-th antenna element 3, a discriminator that estimates the time offset, and a variable time delay element 12, *τᵣᵢ.* The variable time delay element 12 can be either a fractional interpolator that can calculate an intermediate sample with an arbitrary time delay or a sample clock phase shifter that directly affects the sample clock.

The Early-Minus-Late (EML) tracking loop is one known technique to find the desired timing. The EML discriminator takes a correlation value that is one sample before the expected correlation peak (Early Correlation) and one sample after the expected correlation peak (Late Correlation). The difference between the squared magnitude of the result from early correlation and the squared magnitude of the result from late correlation normalized by the signal strength gives an estimate of the time error.

Figure 7 shows an example of a correlator bank that uses the EML technique. This correlator bank assumes that the PN signal is using a sample rate that is half the sample rate of the received signal. Rather than up-sampling the PN signal, the received signal is first low-pass filtered. The low-pass filtered signal is then divided into an even and an odd sample stream. The even sample stream is correlated with the PN signal to give the early correlation estimate. It is also correlated with the PN signal delayed by one sample to give the late estimate. Correlating with the odd sample stream gives the on-time estimate.

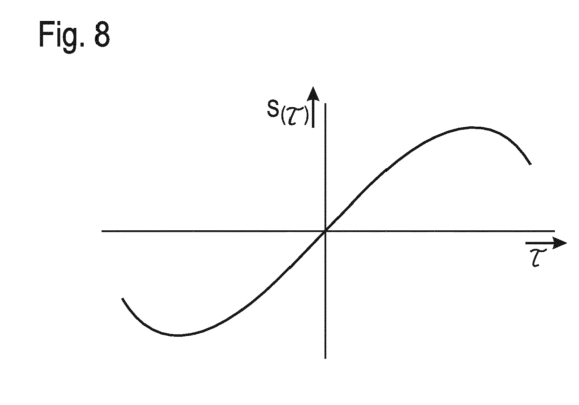

An alternative discriminator is the so called DOT discriminator which takes the real part of the dot product of the early minus late correlation results and the on-time correlation result. An example of a discriminator curve is shown in Figure 8. The discriminator curve shows an almost linear behavior between a delay τ and the output of the discriminator S(τ).

Another embodiment for using the inventive calibration method is that a PN signal is added to each antenna element's transmit signal. Ideally, the power of said PN signal is chosen to be low enough such that the signal power is well below the transmitted and received signal. Typically, the communication standard has requirements with respect to spectrum mask and error vector magnitude. The PN signal is chosen such that all of those requirements are fully fulfilled. Out of each transmit signal of the antenna array, a small portion of the transmit signal of each antenna element is coupled out and combined. Coupling and combining can be achieved either conducted or radiated. The combined signal is then presented to the reference receiver. The received signal is distributed to a bank of correlators similar to the one shown in Figure 7.

For adjusting the timing, a similar DLL as the one used for the receive branches can be used. For the i-th transmitter path, the DLL comprises of the PN signal generator PNi that injects the PN signal 11 into the i-th transmitter path, the correlator bank XCOR PNTi for the i-th antenna element at the reference receiver, a discriminator that estimates the time offset, and a variable time delay element, *τₜᵢ.* The variable time delay element can be either the fractional interpolator that can calculate an intermediate sample with an arbitrary time delay or a sample clock phase shifter that directly affects the sample clock. Again, for the DLL, an EML or DOT kind of discriminator can be used. The amplitude and phase of the correlation result of the on-time correlator gives an estimate of the amplitude and phase of the transmit signal for the i-th antenna element 3 including the calibration path that includes the coupling network. If the contribution of the calibration network is known, those values can be subtracted from the measurement results to yield the current amplitude and phase for that element.

### List of reference symbols

- 1: antenna
- 2: linear antenna array
- 3: antenna element
- 4: baseband processing unit
- 5: transceiver
- 51: reference transceiver
- 6: power amplifier
- 7: port
- 8: transmit signal
- 9: receive signal
- 10: reference transceiver unit
- 11: pseudo-noise signal
- 12: time delay element
- 13: correlator

## Claims

1. A method of self-calibrating active antenna arrays comprising a plurality of active antenna elements whereas each antenna element at least comprising an antenna and a transceiver connected to the antenna at a radio frequency (RF) side via a transmit path or a receive path whereas the transceivers of all antenna elements are connected at a baseband side to a baseband processing unit and the antenna elements are calibrated, **characterized in that**
- a calibration signal is dynamically calculated
- whereas a predetermined signal is added to a signal for every antenna element before this signal is transferred by the transceiver of the antenna element,
- whereas a power of the predetermined signal is at least one order of magnitude smaller than the power of the transferred signal of every antenna element,
- the so modified transferred signal of the antenna element is correlated with the predetermined signal in the baseband processing unit and
- all antenna elements will be aligned to one another by said calculated calibration signal due to the correlation result.

2. A method of self-calibrating active antenna arrays according to claim 1, **characterized in that**
- a calibration signal for the transmit path is calculated whereas
- the predetermined signal specific for every antenna element is added to the transmit signal for every antenna element in the baseband processing unit,
- the transmit signal is picked up and combined from all antenna elements on the RF side,
- the picked up signal is correlated with the predetermined signal specific for every antenna element for all antenna elements in the baseband processing unit,
- the phase of the correlation result is compared to the desired phase and the amplitude of the correlation result is compared to the desired amplitude and
- the results of said comparisons are used to tune the phase and the amplitude corrections for each antenna element at the baseband side, and
- a calibration signal for the receive path is calculated whereas
- the predetermined signal is split and added to the receive signal for every antenna element on the RF side,
- the receive signal from every antenna element is correlated with the predetermined signal of this particular antenna element in the baseband processing unit,
- the correlation results are used to adjust the time offset of the antenna elements.

3. A method of self-calibrating active antenna arrays according to one of the foregoing claims, **characterized in that** the calibration signal for the transmit path aligns a Tx-time delay of every active antenna element.

4. A method of self-calibrating active antenna arrays according to one of the foregoing claims, **characterized in that** the calibration signal for the receive path aligns a Rx-time delay of every active antenna element.

5. A method of self-calibrating active antenna arrays according to one of the foregoing claims, **characterized in that** the calibration in Tx-time delay and Rx-time delay are executed concurrently.

6. A method of self-calibrating active antenna arrays according to one of the foregoing claims, **characterized in that** the Tx-time delay and the Rx-time delay are aligned in the baseband.

7. A method of self-calibrating active antenna arrays according to one of the foregoing claims, **characterized in that** the predetermined signal specific for every antenna element added to each antenna element has a bandwidth smaller than the transmit and receive signal and has a signal power free of influence for the transmit and receive signal.

8. A method of self-calibrating active antenna arrays according to one of the foregoing claims, **characterized in that** the predetermined signal is generated as a pseudo-noise (PN) signal.

9. A method of self-calibrating active antenna arrays according to claim 8, **characterized in that** every PN signal is a binary pseudo random sequence of data bits generated with a different PN sequence or with a different binary sequence phase offset.

10. Apparatus for self-calibrating active antenna arrays comprising a plurality of active antenna elements whereas each antenna element comprising an antenna and a transceiver with a connection to the antenna via a transmit path and a receive path whereas the transceivers of all antenna elements are connected to a baseband processing unit, **characterized in that** the apparatus comprises signal generators generating a predetermined signal specific for each antenna element and a reference transceiver unit that is connected to the baseband processing unit comprising a combiner combining signals of the connections between the transceivers and the antennas of the several antenna elements and a splitter logic unit dividing signals from the reference transceiver to the antennas of the several antenna elements and means for correlations signals from the reference transceiver.

11. Apparatus for self-calibrating active antenna arrays according to claim 10, **characterized in that** the reference transceiver unit comprising of a reference transmitter and a reference receiver.

12. Apparatus for self-calibrating active antenna arrays according to one of the foregoing claims, **characterized in that** the reference transceiver unit is combined with the active antenna elements by means of couplers and RF wires.

13. Apparatus for self-calibrating active antenna arrays according to one of the foregoing claims, **characterized in that** the reference transceiver unit is combined with the active antenna elements by radiation.

14. Apparatus for self-calibrating active antenna arrays according to one of the foregoing claims, **characterized in that** the signal generator is designed as a pseudo noise (PN) signal generator.
